# EUROPÄISCHE PATENTANMELDUNG

(11) **EP 2 824 803 A2**
(43) Veröffentlichungstag der Anmeldung: **14.01.2015**
(21) Anmeldenummer: 14175911.8
(22) Anmeldetag: 07.07.2014
(51) Int. Cl.: H02K 3/52

(54) **Gehäuseelement für einen Wischermotor, Verfahren zum Herstellen eines Gehäuseelements sowie Wischermotor**

(30) Priorität: 08.07.2013 DE 102013107144
(71) Anmelder: Valeo Systèmes d'Essuyage, 78321 Le Mesnil Saint Denis (FR)
(72) Erfinder: Stefani, Siegfried, 71739 Oberriexingen (DE); Heuberger, Christof, 71706 Markgröningen (DE); Mozer, Bastian, 71634 Ludwigsburg (DE); Hartmann, Werner, 71665 Vaihingen/Enz (DE)
(74) Vertreter: Callu Danseux, Violaine

(57) **Zusammenfassung**

Die Erfindung betrifft ein Gehäuseelement (20) für einen Wischermotor (10), wobei das Gehäuseelement (20) mit wenigstens einem Stromführungselement (30; 30a bis 30e) verbunden ist, das an vorzugsweise gegenüberliegenden Endbereichen jeweils einen Kontaktabschnitt (31 a bis 31 e, 32a bis 32e) aufweist, wobei das wenigstens eine Stromführungselement (30; 30a bis 30e) aus einem starren, metallischen Element besteht, dessen Querschnitt an den beiden Kontaktabschnitten (31 a bis 31e, 32a bis 32e) einem mit dem jeweiligen Kontaktabschnitt (31 a bis 31e, 32a bis 32e) verbindbaren Gegenelement angepasst ist. Erfindungsgemäß ist es vorgesehen, dass das Stromführungselement (31 a bis 31 e, 32a bis 32e) aus einem biegesteifen Drahtabschnitt ausgebildet ist.

## Beschreibung

### Stand der Technik

Die Erfindung betrifft ein Gehäuseelement für einen Wischermotor nach dem Oberbegriff des Anspruchs 1. Ferner betrifft die Erfindung ein Verfahren zum Herstellen eines erfindungsgemäßen Gehäuseelements sowie einen Wischermotor unter Verwendung eines erfindungsgemäßen Gehäuseelements.

Ein Gehäuseelement nach dem Oberbegriff des Anspruchs 1 ist aus dem Stand der Technik bereits bekannt. Es dient als Bestandteil eines Getriebegehäuses bei einem Wischermotor und ist in Form eines Gehäusedeckels ausgebildet. Der bekannte Gehäusedeckel weist einen Steckeranschluss zur elektrischen Kontaktierung des Wischermotors auf, wobei der Steckeranschluss innerhalb des Getriebegehäuses mit einem Schaltungsträger in Form einer Leiterplatte für den Wischermotor elektrisch kontaktiert ist. Die Leiterplatte ist wiederum elektrisch mit dem eigentlichen Wischermotor beziehungsweise Elektromotor verbunden. Die Verbindung zwischen dem Steckeranschluss, der mit einem kundenseitigen Fahrzeuggegenstecker kontaktierbar ist, und der Leiterplatte und/oder zwischen der Leiterplatte und dem Elektromotor erfolgt mittels starrer Stromführungselemente, die als Stanz-/Prägeteile aus einem zunächst flachen Blech ausgebildet sind. Hierzu werden die der elektrischen Kontaktierung dienenden Stromführungselemente üblicherweise gleichzeitig (mit den entsprechenden Abständen zwischen den Stromführungselementen) aus einer größeren Blechplatte als Stanzgitter ausgestanzt, wobei die Stromführungselemente zur Anpassung an die Geometrie des Gehäuseelements und der Anordnung der zu kontaktierenden Teile oftmals in einem Winkel zueinander angeordnete Teilabschnitte aufweisen. Nach dem Stanzen werden die Stromführungselemente in einem Prägewerkzeug weiterbearbeitet, um die Stromführungselemente der Kontur des Gehäuseelements anzupassen. Die so ausgebildeten Stromführungselemente werden dann (bei einer Ausbildung des Gehäuseelements aus Kunststoff) in ein entsprechendes Spritzgusswerkzeug für das Gehäuseelement eingelegt und von dem Kunststoff des Gehäuseelements, Kontaktabschnitte freilassend, umspritzt. Dadurch, dass die Stromführungselemente aus einem plattenförmigen Blech ausgestanzt werden, weisen diese üblicherweise einen rechteckförmigen Querschnitt auf, wobei der Querschnitt, beispielsweise in dem Bereich des Steckeranschlusses, durch einen Stanz-/Prägeschritt gegebenenfalls einem Gegenstecker angepasst wird. Nachteilig dabei ist, dass bei der Fertigung derartiger Stromführungselemente, beispielsweise für einen Wischermotor, ein relativ großer Stanzabfall anfällt und dass zum Formen beziehungsweise zum Biegen der Stromführungselemente relativ aufwändig ausgebildete Prägewerkzeuge erforderlich sind.

Aus der DE 1 159 064 ist ein Elektromotor zum Antrieb eines Scheibenwischers bekannt. Der Elektromotor umfasst dabei ein Gehäuse, in dem ein Getriebe untergebracht ist. Aus dem Gehäuse sind elektrische Leitungen zur Stromversorgung des Elektromotors herausgeführt. Diese sind mittels einer außerhalb des Getriebegehäuses angeordneten Steckeraufnahme mit weiteren elektrischen Leitungen verbunden. Letztere haben jeweils an deren Enden zusätzlich aufgebrachte Hülsen, um in der Steckeraufnahme lösbar gehalten zu werden. Dabei bestehen alle elektrischen Leitungen aus Litzen umfassend eine Mehrzahl von Einzeladern und sind biegeschlaff.

DE 26 58 746 C3 offenbart einen Wischermotor mit einem an der Außenseite dessen Gehäuses befestigten Stecker. Die elektrischen Leitungen zur Stromversorgung des Elektromotors sind im Bereich des Steckers aus dem Gehäuse herausgeführt. Diese biegeschlaffen Leitungen weisen im Bereich der Enden, die mit dem Stecker verbunden werden, aufgebrachte Hülsen auf.

### Offenbarung der Erfindung

Ausgehend von dem dargestellten Stand der Technik liegt der Erfindung die Aufgabe zugrunde, ein Gehäuseelement für einen Wischermotor nach dem Oberbegriff des Anspruchs 1 derart weiterzubilden, dass eine herstellungstechnisch besonders einfache und kostengünstig ausgebildete Konstruktion des Gehäuseelements mit wenigstens einem Stromführungselement ermöglicht wird. Insbesondere sollen die beim Stand der Technik üblicherweise anfallenden Stanzgitterabfälle vermieden werden und möglichst einfache sowie kostengünstig herstellbare Werkzeuge zum Formen beziehungsweise Biegen der Stromführungselemente ermöglicht werden.

Diese Aufgabe wird erfindungsgemäß bei einem Gehäuseelement für einen Wischermotor mit den Merkmalen des Anspruchs 1 dadurch gelöst, dass das Stromführungselement aus einem biegesteifen Drahtabschnitt ausgebildet ist.

Unter Gegenelement im Sinne der vorliegenden Erfindung wird ein elektrischer Leiter verstanden, der über entsprechende Kontakte mit dem wenigstens einen Stromführungselement elektrisch verbindbar ist.

Ein solches Gegenelement kann damit selbst ein erfindungsgemäßes Stromführungselement, also ein Drahtabschnitt sein, der beispielsweise eine Masseleitung, einen Abzweig aus dem Stromführungselement oder die Kontaktstifte eines inneren oder äußeren Steckeranschlusses darstellt. Auch kann das Gegenelement ein Kontakt sein, der Kontaktabschnitte aufweist, die elektrisch lösbar mit den Kontaktabschnitten des wenigstens einen Stromführungselements verbindbar sind. In anderen Worten bedeutet dies, dass das Gegenelement wenigstens als ein Kontaktabschnitt eines Gegensteckers, der separat und lösbar mit dem inneren oder äußeren Steckeranschluss elektrisch verbindbar sein kann, ausgebildet ist. Beispielsweise können dann die Kontaktabschnitte des inneren oder äußeren Steckeranschlusses entsprechend der Geometrie der Kontaktabschnitte des Gegensteckers ausgeführt sein. Bei verbundenem Steckeranschluss und Gegenstecker ergibt sich somit ein Stromfluss zwischen den beiden Kontaktabschnitten des jeweiligen Steckeranschluss und seines entsprechenden Gegensteckers. Bei getrenntem Steckeranschluss und Gegenstecker wird der Stromfluss entsprechend unterbrochen.

Das Gehäuseelement kann einen Teil oder das vollständige Gehäuse bilden, welches bei der Anwendung als Wischermotor den als Elektromotor ausgebildeten Antriebsmotor, das dem Antriebsmotor zugehörige Getriebe und/oder die zur Ansteuerung des Antriebsmotors benötigte Leiterplatte wenigstens teilweise umgibt. So kann das vollständige Gehäuse von mehreren Gehäuselementen gebildet werden. Das wenigstens eine Stromführungselement kann insbesondere einteilig (z.B. eingegossen) mit derjenigen Wandung des Gehäuseelements ausgeführt sein, die im zusammengebauten Zustand dem Antriebsmotor, dem zugehörigen Getriebe und/oder der Leiterplatte zugewandt ist.

Auf der Leiterplatte sind dabei elektrische beziehungsweise elektronische Bauteile für den Wischermotor angeordnet, sodass die Leiterplatte als Steuerung mit insbesondere wenigstens einem Prozessor und einem Speicher zu dessen Ansteuerung, insbesondere unabhängig von einer vorhandenen Fahrzeugsteuerung, dienen kann.

Das Stromführungselement gemäß der vorliegenden Erfindung ist ein elektrischer Leiter. Unter einem Drahtabschnitt wird dabei im Rahmen der Erfindung ein üblicherweise beispielsweise auf einer Drahtspule bevorrateter Abschnitt eines (endlosen) biegesteifen Drahtes verstanden, der als Ausgangsmaterial von der Drahtrolle in der entsprechenden Länge abgetrennt wird. Mit anderen Worten gesagt bedeutet dies, dass für jedes Stromführungselement ein entsprechender, separater Drahtabschnitt verwendet wird, so dass sich derartige Stromführungselemente unter Verzicht eines Stanzverfahrens besonders einfach herstellen lassen. So kann jeder Drahtabschnitt einzeln durch Umformen und Ablängen des Drahtabschnitts von der Drahtrolle entstehen.

Wesentlich ist, dass der Drahtabschnitt biegesteif ist, das bedeutet aus einem Material hergestellt ist, welches nach dessen Umformung - ohne eine verhältnismäßig große äußere Krafteinwirkung hierauf - die ihm durch die Umformung verliehene Ausgangsform beibehält. In anderen Worten ist das Material des Drahtabschnitts so gewählt, dass es seine ihm nach der Umformung verliehene Gestalt infolge äußerer Krafteinwirkung nur unter Überwindung eines mechanischen Widerstands ändert. Der mechanische Widerstand kann dabei derart gewählt sein, dass es im bei der Herstellung des Gehäuseelements oder beim Betrieb des Wischermotors, insbesondere unter den hierfür vorgesehenen Einsatzfällen, nicht zu einer Änderung der dem Drahtabschnitt nach der Umformung verliehenen Gestalt kommt.

Das Ausgangsmaterial für das Stromführungselement beziehungsweise für den Drahtabschnitt kann als ein Einzeldraht oder Einzelader ausgebildet sein.

Insbesondere ist es gemäß der breitesten Ausführungsform der Erfindung unwesentlich, welchen Querschnitt (beispielsweise rund, mehreckig oder quadratisch) der Drahtabschnitt aufweist. Wesentlich ist lediglich, dass der Querschnitt derart bemessen ist, dass beispielsweise ein bestimmter elektrischer Widerstand nicht überschritten wird.

Vorteilhafte Weiterbildungen des erfindungsgemäßen Gehäuseelements für einen Wischermotor sind in den Unteransprüchen aufgeführt.

In besonders bevorzugter Ausgestaltung der Stromführungselemente ist es vorgesehen, dass der Drahtabschnitt, insbesondere dessen Ausgangsmaterial zumindest gegebenenfalls mit Ausnahme in den Kontaktabschnitten, einen runden Querschnitt aufweist. Eine derartige Ausbildung hat den Vorteil, dass ein besonders einfaches Umformen wie z.B. Biegen beziehungsweise Prägen der Stromführungselemente ermöglicht wird, da unabhängig von der Lage des Stromführungselements in alle Richtungen ein Biegen, auch in Form einer Krümmung bzw. eines Radius, ermöglicht wird.

Um eine kundenspezifische Kontaktierungsmöglichkeit mit einem fahrzeugseitigen Gegenstecker zu ermöglichen, die herstellungstechnisch besonders einfach realisierbar ist, wird vorgeschlagen, dass die Kontaktabschnitte einen im Wesentlichen rechteckigen Querschnitt aufweisen, der vorzugsweise durch einen Umform- beziehungsweise Prägeschritt erzeugt ist, und dass die Querschnittsfläche des Drahtes an den Kontaktabschnitten und in dem Bereich zwischen den Kontaktabschnitten zumindest im Wesentlichen gleich groß ist.

Das Ausgangsmaterial für das Stromführungselement beziehungsweise für den Drahtabschnitt kann frei von einer Ummantelung sein, die beispielsweise als elektrische Isolation dient.

Um eine definierte Lage des Stromführungselements in beziehungsweise am Gehäuseelement zu ermöglichen, und um darüber hinaus die Gefahr von elektrischen Kurzschlüssen insbesondere in den Bereichen, in denen keine elektrische Kontaktierung mit Gegenelementen vorgesehen ist, zu vermeiden, wird vorgeschlagen, dass das Stromführungselement zumindest bereichsweise von dem Material des Gehäuseelements, bevorzugt Kunststoff und insbesondere elektrisch nicht leitender Kunststoff umspritzt ist. Damit wird erreicht, dass das wenigstens eine Stromführungselement einteilig mit dem Gehäuseelement ist und als elektrischer Isolator dient.

Um mehrere Stromführungselemente gleichzeitig in ihrer Lage zum Gehäuseelement zu positionieren, sowie um eine besonders einfache Herstellbarkeit beziehungsweise Verbindung der Stromführungselemente mit dem Gehäuseelement zu erzielen, wird vorgeschlagen, dass mehrere Stromführungselemente kraft-, form- und/oder stoffschlüssig mittels eines Trägerelements zu einem einzigen als Montageeinheit wirkenden Teil zusammengefasst werden. Zur Erzielung eines Stoffschlusses zwischen Stromführungselementen und Trägerelement können die Stromführungselemente mit dem Kunststoffs des Trägerelements umspritzt werden. Die mehreren Stromführungselemente, die zu dem Trägerelement zusammengefasst sind, stellen somit eine relativ starre, vorgefertigte Baueinheit dar, die anschließend entweder mit dem Gehäuseelement zum Beispiel kraft- und/oder formschlüssig verbunden werden kann. Alternativ dazu (bevorzugt) kann diese Baueinheit dann von demselben Kunststoff woraus auch das Gehäuseelements wenigstens teilweise hergestellt wurde, umspritzt werden.

Um auch bei derartigen Ausführungsformen, bei denen die Stromführungselemente relativ ungeschützt im beziehungsweise am Gehäuseelement angeordnet sind, einen hinreichend guten Schutz vor elektrischen Kurzschlüssen zu ermöglichen, wird vorgeschlagen, dass das wenigstens eine Stromführungselement von einem separaten Schutzelement, das als elektrischer Isolator wirkt, zumindest bereichsweise überdeckt ist.

Nach einer weiteren Ausführungsform kann ein äußerer Steckeranschluss auf der Außenseite des Gehäuseelements angeordnet und bevorzugt einteilig mit diesem ausgeführt sein, wobei das dem äußeren Steckeranschluss zugewandte Ende des Stromführungselements in dem äußeren Steckeranschluss aufgenommen ist, sodass die Kontaktabschnitte gleichzeitig die Kontakte des äußeren Steckeranschlusses ausbilden, die mit Kontakten eines als Gegenelement fungierenden äußeren Gegensteckers elektrisch verbindbar sind.

Gemäß einer weiteren Ausführungsform kann ein innerer Steckeranschluss auf der Innenseite des Gehäuseelements angeordnet und bevorzugt einteilig mit diesem ausgeführt sein, wobei das dem inneren Steckeranschluss zugewandte Ende des Stromführungselements in dem inneren Steckeranschluss aufgenommen ist, sodass die Kontaktabschnitte gleichzeitig die Kontakte des inneren Steckeranschlusses ausbilden, die mit Kontakten eines als Gegenelement fungierenden inneren Gegensteckers kontaktierbar sind.

Insbesondere bei den letzten beiden Ausführungsformen, aber auch generell, kann das wenigstens eine Stromführungselement im Bereich des inneren und äußeren Steckeranschlusses von dem Kunststoff des Gehäuseelements, insbesondere die Kontaktabschnitte freilassend, umspritzt sein.

Die Erfindung umfasst auch ein Verfahren zum Herstellen eines erfindungsgemäßen Gehäuseelements, bei dem wenigstens ein Stromführungselement mit einem Gehäuseelement verbunden wird, wobei das Verfahren durch folgende Herstellungsschritte gekennzeichnet ist:
- Ablängen wenigstens eines Drahtabschnitts von einem einen konstanten, insbesondere runden Querschnitt aufweisenden, endlosen biegesteifen Draht
- Gegebenenfalls Biegen des Drahtabschnitts
- Ändern des Querschnitts des Drahts an wenigstens einem Kontaktabschnitt
- Zumindest mittelbares Befestigen des Drahtabschnitts an einem Gehäuseelement.

Beim Ablängen wird der Drahtabschnitt auf die gewünschte Länge gebracht, die im Wesentlichen der nach der Herstellung des Gehäuseelements erzielten Länge des Drahtabschnitts entspricht, d.h. von seinem einen Endbereich zu seinem anderen gegenüberliegenden Endbereich. Dadurch lassen sich beispielsweise Stromführungselemente herstellen, die vollständig über die gesamte Länge aus einem einzigen Drahtabschnitt hergestellt sind. Natürlich können die Stromführungselement auch aus mehreren zusammengefügten Drahtabschnitten bestehen.

Biegen bedeutet hier ein entsprechendes insbesondere mehrmaliges, bleibendes Umformen des Drahtabschnitts.

Insbesondere die erfindungsgemäßen Verfahrensschritte des Biegens und Ändern des Querschnitts können grundsätzlich in beliebiger Reihenfolge erfolgen.

Auch können alle erfindungsgemäßen Verfahrensschritte zu einzigen Fertigungsprozess zusammengefasst sein und in einem einzigen Werkzeug herstellbar sein.

In einer bevorzugten Ausgestaltung des erfindungsgemäßen Verfahrens ist es vorgesehen, dass mehrere Stromführungselemente von dem Kunststoff des Trägerelements zumindest bereichsweise umspritzt werden, und dass der Verbund aus den mehreren Stromführungselementen und dem Trägerelement anschließend von dem Kunststoff des Gehäuseelements zumindest bereichsweise umspritzt wird, oder dass der Verbund aus den mehreren Stromführungselementen und dem Trägerelement anschließend mit dem aus Metall bestehenden Gehäuseelement verbunden wird. Dabei kann es sich bei dem Kunststoff des Gehäuseelements und dem Kunststoff des Trägerelements um denselben oder unterschiedlichen Kunststoff handeln. Auch hier gilt das zu dem Kunststoff des Gehäuseelements Gesagte.

Weiterhin umfasst die Erfindung einen Wischermotor mit einem erfindungsgemäßen Gehäuseelement. Der Wischermotor kann dann einen als Elektromotor ausgebildeten Antriebsmotor, ein zur Drehzahl-/Drehmomentwandlung mit dem Antriebsmotor gekoppeltes oder koppelbares Getriebe und/oder eine zur Ansteuerung des Antriebsmotors benötigte Leiterplatte aufweisen. Das Gehäuseelement kann dann wenigstens eines dieser Teile wenigstens teilweise umgeben.

Damit kann das wenigstens eine Stromführungselement mit seinem einen Endbereich elektrisch an den Wischermotor und/oder die Leiterplatte, bevorzugt unter Zwischenschaltung eines inneren Steckeranschlusses, und mit seinem anderen Endbereich elektrisch an einen äußeren Steckeranschluss elektrisch leitend anschließbar sein. Dabei ist es denkbar, dass das Stromführungselement zwischen diesen beiden Steckeranschlüssen einteilig oder mehrteilig, das bedeutet aus einem einzigen oder mehreren zusammengefügten Drahtabschnitten ausgeführt ist.

In bevorzugter Ausgestaltung des Gehäuseelements ist dieses als ein Getriebedeckel eines Getriebegehäuses ausgebildet.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
Fig.1 einen Wischermotor unter Verwendung eines erfindungsgemäßen Gehäuseelements in einer perspektivischen Ansicht,
Fig. 2 einen Getriebedeckel mit einer in dem Getriebedeckel angeordneten Leiterplatte in Explosionsdarstellung,
Fig. 3 den Getriebedeckel gemäß Fig. 2 in teilweise geschnittener Draufsicht,
Fig.4 die bei dem Getriebedeckel gemäß der Fig. 2 und 3 verwendeten Stromführungselemente in Draufsicht,
Fig.5 die Stromführungselemente gemäß Fig. 4 in einer Seitenansicht,
Fig. 6 bis 8 jeweils unterschiedlich gestaltete Kontaktabschnitte an Stromführungselementen in Seitenansicht mit einer Darstellung der jeweiligen Querschnitte,
Fig. 9 einen modifizierten Gehäusedeckel unter Verwendung eines Schutzelements zur Abdeckung von Stromführungselementen in einem Gehäuseelement und
Fig. 10 einen Schnitt in der Ebene A-A der Fig. 9.

Gleiche Elemente beziehungsweise Elemente mit gleicher Funktion sind in den Figuren mit den gleichen Bezugsziffern versehen.

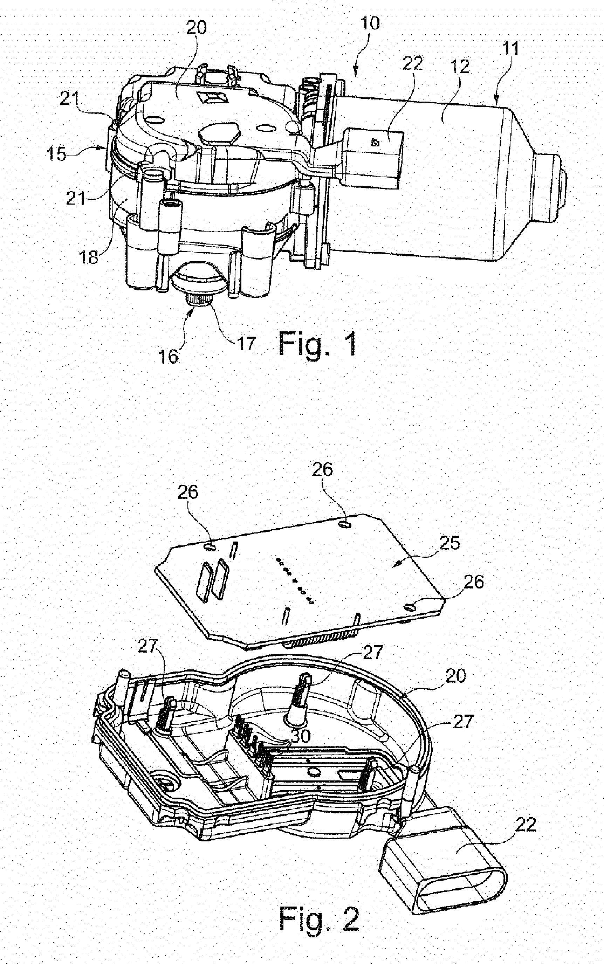

In der Fig. 1 ist ein Wischermotor 10 zum zumindest mittelbaren Antreiben beziehungsweise Bewegen wenigstens eines in den Figuren nicht dargestellten Wischblatts gezeigt. Der Wischermotor 10 weist einen als Elektromotor ausgebildeten Antriebsmotor 11 auf, dessen im Wesentlichen topfförmiges Gehäuse 12 an einer Stirnseite mit einem hier dreiteiligen Getriebegehäuse 15 verbunden, insbesondere verschraubt ist. In dem Getriebegehäuse 15 ist ein nicht dargestelltes Getriebe wie Untersetzungsgetriebe zur Reduktion der Drehzahl des Antriebsmotors 11 unter gleichzeitiger Steigerung dessen Drehmoments angeordnet, welches mit dem Antriebsmotor 11 gekoppelt oder koppelbar ist. Aus dem Getriebegehäuse 15 tritt eine in der Fig. 1 erkennbare Antriebswelle 16 mit einem Verzahnungsbereich 17 heraus, wobei der Verzahnungsbereich 17 beispielsweise mit einem Wischgestänge verbindbar ist, welches wiederum mit beispielsweise zwei Wischblättern verbunden ist.

Das Getriebegehäuse 15 weist im dargestellten Ausführungsbeispiel wenigstens ein Getriebegehäusegrundteil 18 auf, das mit einem Gehäuseelement in Form eines Gehäusedeckels 20 verschließbar ist, insbesondere mittels mehrerer, in der Fig. 1 erkennbarer Befestigungsschrauben 21. Der Gehäusedeckel 20 ist vorzugsweise aus Kunststoff hergestellt und als Spritzgussteil ausgebildet. Es ist jedoch auch möglich, dass der Gehäusedeckel 20 aus Metall besteht. In diesem Fall ist der Gehäusedeckel 20 vorzugsweise als Aluminium-Druckgussteil ausgebildet.

An dem Gehäusedeckel 20 ist vorliegend einstückig ein Steckeranschluss 22 angeformt, der mit einem entsprechenden Gegenstecker eines Kabelbaums des Kraftfahrzeugs kontaktierbar ist (nicht dargestellt). Über den Steckeranschluss 22 findet die elektrische Kontaktierung, das heißt die Ansteuerung sowie die Spannungsversorgung des Wischermotors 10, statt. Alternativ könnte der äußere Steckeranschluss 22 auch separat zu dem Gehäuse ausgebildet sein.

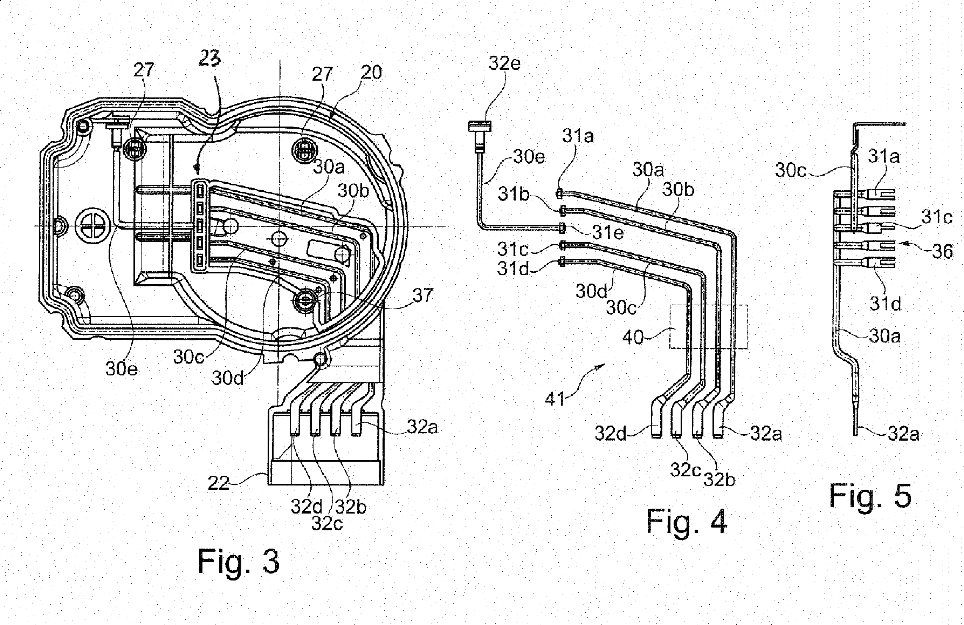

In der Fig. 2 ist ein Schaltungsträger in Form einer Leiterplatte 25 erkennbar, auf der elektrische beziehungsweise elektronische Bauteile für den Wischermotor 10 angeordnet sind, sodass die Leiterplatte als Steuerung mit wenigstens einem Prozessor und einem Speicher zu dessen Ansteuerung dienen kann. Die Leiterplatte 25 weist im dargestellten Ausführungsbeispiel drei Durchgangsöffnungen 26 auf, über die die Leiterplatte 25 mit in dem Gehäusedeckel 20 fluchtend zu den Durchgangsöffnungen 26 angeordneten Rastdomen 27 mittels einer Rastverbindung verbunden ist. Die elektrische Kontaktierung der Leiterplatte 25 beziehungsweise der auf der Leiterplatte 25 angeordneten Bauteile findet über mehrere, in dem Gehäusedeckel 20 angeordnete Stromführungselemente 30 statt. Die in den Fig. 3 bis 5 erkennbaren, hier dem Gehäusedeckel 20 zugeordneten erfindungsgemäßen Stromführungselemente 30 sind als voneinander getrennt ausgebildete Stromführungselemente 30 in dem Gehäusedeckel 20 angeordnet. Alternativ könnten die Stromführungselemente 30 auch in den weiteren Teilen des Getriebegehäuses 15, wie dem Getriebegehäusegrundteil 18 angeordnet und insbesondere damit einteilig ausgeführt sein. Insbesondere erkennt man vier Stromführungselemente 30a bis 30d, die die Leiterplatte 25, die vorliegend von dem Getriebegehäusegrundteil 18 und dem Gehäsuedeckel 20 umgeben ist, mit dem Steckeranschluss 22 verbinden. Dazu sind die Stromführungselemente 30 aus dem Gehäuse nach außen durch den äußeren Steckeranschluss 22 herausgeführt. Darüber hinaus ist ein Stromführungselement 30e erkennbar, welches als Massekontakt dient und die Leiterplatte 25 mit der (elektrischen) Masse des Wischermotors 10 elektrisch leitend verbindet.

Erfindungsgemäß ist es vorgesehen, dass die Stromführungselemente 30a bis 30e jeweils zumindest bereichsweise aus einem biegesteifen Drahtabschnitt der entsprechend benötigten Länge ausgebildet werden. Unter einem Drahtabschnitt wird verstanden, dass von einen insbesondere in Spulenform bevorrateten, endlosen Draht ein Drahtabschnitt der benötigten Länge abtrennt wird, aus dem das Stromführungselement 30, 30a bis 30e insbesondere durch Ablängen auf die gewünschte Länge und entsprechendes insbesondere mehrmaliges, bleibendes Umformen wie Biegen gebildet wird. Diese Schritte können in einem einzigen Fertigungsprozess zusammengefasst sein. In besonders bevorzugter Ausgestaltung handelt es sich bei dem Draht um einen Draht mit rundem Querschnitt. Es ist jedoch auch denkbar, dass der Draht beispielsweise einen mehreckigen wie quadratischen Querschnitt aufweist.

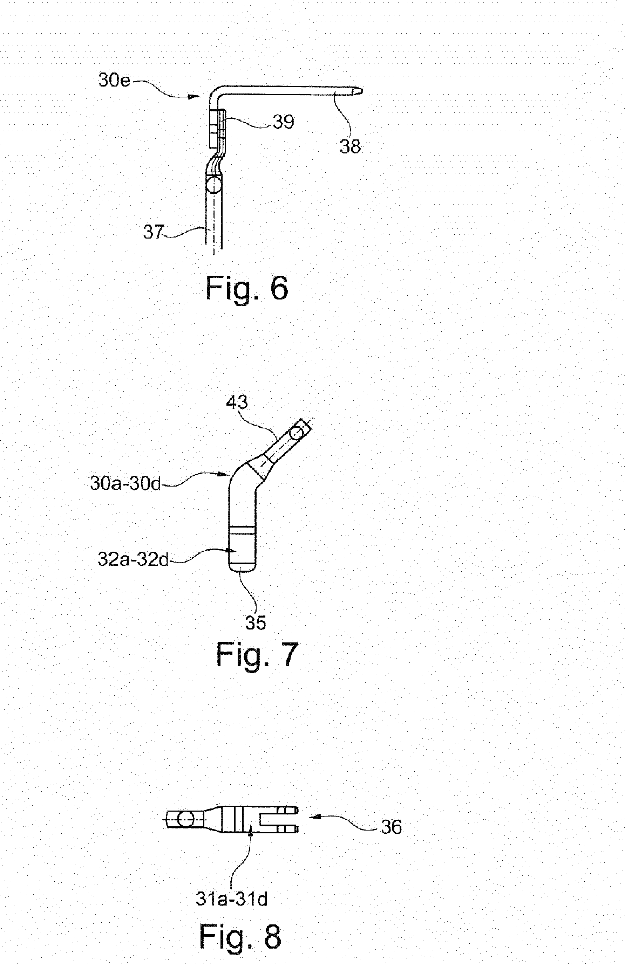

Die Stromführungselemente 30, 30a bis 30e weisen in dem dargestellten Ausführungsbeispiel an ihren jeweiligen Endbereichen jeweils einen Kontaktabschnitt 31 a bis 31 e sowie 32a bis 32e auf, wobei vorliegend die Kontaktabschnitte 31 a bis 31e jeweils der elektrischen Kontaktierung der Leiterplatte 25 dienen und in einem inneren Steckeranschluss 23 aufgenommen sein können, während vorliegend die Kontaktabschnitte 32a bis 32d innerhalb des äußeren Steckeranschlusses 22 angeordnet sind und der Kontaktabschnitt 32e den Massekontakt ausbildet. Wesentlich ist, dass die Kontaktabschnitte 31 a bis 31e sowie 32a bis 32e jeweils einen von dem ansonsten insbesondere runden Querschnitt des Ausgangsmaterials abweichenden Querschnitt aufweisen können. Insbesondere können die Kontaktabschnitte 31 a bis 31e sowie 32a bis 32e einen rechteckförmigen oder nahezu rechteckförmigen Querschnitt aufweisen, der insbesondere durch Abflachung des kreisrunden Ausgangsmaterials an wenigstens einer Seite erzielbar ist. Dabei sind die innerhalb des äußeren Steckeranschlusses 22 angeordneten Kontaktabschnitte 32a bis 32d, die mit dem fahrzeugseitigen Gegenstecker kontaktierbar sind, dem jeweiligen Gegenstecker angepasst. Hierzu weisen die Kontaktabschnitte 32a bis 32d abgeschrägte oder wenigstens an einer, bevorzugt auf zwei Seiten abgeflachte Enden 35 auf, die insbesondere in der Fig. 7 erkennbar sind. In anderen Worten bedeutet dies, dass die Kontaktabschnitte 32a bis 32d, wie dies in Figur 3 gezeigt ist so ausgeführt sein können, dass sie zugleich die Kontakte oder Kontaktstifte des Steckeranschlusses 22, in die der Gegenstecker eingreift, ausbilden. Dazu können diese Kontaktabschnitte 32a bis 32d derart ausgeführt sein, dass sie komplementär zu dem Gegenstecker ausgeführt sind und mit den entsprechenden Kontaktabschnitten des Gegensteckers im zusammengesteckten Zustand eine elektrisch leitende Verbindung herstellen. Damit können die Stromführungselemente 30, 30a bis 30e und die Kontaktabschnitte 32a bis 32d miteinander einteilig ausgeführt sein. Selbiges gilt auch für die Kontaktabschnitte 31a bis 31e, die die Kontakte des inneren Steckeranschlusses 23 ausbilden können.

Alternativ können die Kontakte oder Kontaktstifte des äußeren Steckeranschlusses 22, die in die entsprechend ausgeführten Kontakte oder Kontaktstifte des Gegensteckers eingreifen, separat ausgeführt sein, wie dies nachfolgend insbesondere für das dem Antriebsmotor 11 oder der Leiterplatte 25 zugewandte Ende der Stromführungselement 30, 30a bis 30e beschrieben wird. Die separat zu den Stromführungselementen 37 vorgesehenen Kontakte oder Kontaktstifte des Steckeranschlusses 22 sind dann mit den Kontaktabschnitten 32a bis 32d stoffschlüssig beispielsweise durch Schweißen verbunden. Selbiges gilt auch für die Kontaktabschnitte 31a bis 31e, die die Kontakte des inneren Steckeranschlusses 23 ausbilden können.

Die hier mit der Leiterplatte 25 elektrisch verbundenen, insbesondere verschweißten beziehungsweise verlöteten Kontaktabschnitte 31 a bis 31e weisen gemäß der Darstellung der Fig. 5, 6 und 8 separate stiftförmige Fortsätze 36, 38 die als Kontakte oder Kontaktstifte dienen, auf, die in die entsprechenden Durchgangsöffnungen 26 der Leiterplatte 25 einführbar und mit dieser stromleitend kontaktierbar sind. Darüber hinaus ist aus den Fig. 5 und 6 entnehmbar, dass das Stromführungselement 30e aus zwei Teilen 37, 38 besteht, die in einem miteinander verbundenen, insbesondere verschweißten Verbindungsbereich 39 jeweils einen rechteckförmigen Querschnitt aufweisen und einander überlappen. Insbesondere liegt es auch im Rahmen der Erfindung, das Teil 38 des Stromführungselements 30e, welches den Kontaktabschnitt 32e ausbildet, zusammen mit dem Teil 37 insgesamt gesehen aus einem Flachmaterial auszubilden. Damit könnten auch die dem Antriebsmotor 11 oder der Leiterplatte 25 zugewandte Enden der Stromführungselement 30, 30a bis 30e, also die Kontaktabschnitte 31 a bis 31 e einteilig ausgebildet sein.

Bevorzugt weisen die Kontaktabschnitte 31 a bis 31e sowie 32a bis 32e eine Querschnittsfläche auf, die zumindest im Wesentlichen der Querschnittsfläche der Stromführungselemente 30a bis 30e in den Bereichen entspricht, in denen keine Kontaktabschnitte 31 a bis 31e sowie 32a bis 32e vorhanden sind. Ausgenommen davon sind insbesondere die Enden 35 der Kontaktabschnitte 32a bis 32d sowie der Bereich der Fortsätze 36. Die Fertigung der Kontaktabschnitte 31 a bis 31e beziehungsweise 32a bis 32e erfolgt nach dem Ablängen der Stromführungselemente 30a bis 30e und einem üblicherweise stattfindenden Biegen, um die Stromführungselemente 30a bis 30e der Kontur des Gehäusedeckels 20 beziehungsweise des Steckeranschlusses 22 anzupassen, durch einen Umform- oder Prägeprozess.

Insbesondere für den Fall, dass unabhängig von den gezeigten Ausführungsformen der Gehäusedeckel 20 wenigstens teilweise aus Kunststoff hergestellt ist und bevorzugt als Spritzgussteil ausgebildet ist, kann es optional vorgesehen sein, dass entsprechend der Darstellung der Fig. 4 beispielhaft die Stromführungselemente 30a bis 30d von dem Material eines wenigstens teilweise aus Kunststoff hergestellten Trägerelements 40 bereichsweise umspritzt sind. Eine derartige, aus dem Trägerelement 40 und den Stromführungselementen 30a bis 30d bestehende, vorgefertigte Montageeinheit 41 wird nach deren Fertigung in ein Spritzgusswerkzeug für den Gehäusedeckel 20 eingelegt, so dass nach Ausbilden des Gehäusedeckels 20 die Stromführungselemente 30a bis 30e von dem Material des Gehäusedeckels 20, vorzugsweise lediglich die Kontaktabschnitte 31 a bis 31 e sowie 32a bis 32e freilassend, umspritzt sind. Alternativ ist es auch möglich, das Trägerelement 40 mit den Stromführungselementen 30a bis 30d auf sonstige Art und Weise mit dem Gehäusedeckel 20 zu verbinden.

In der Fig. 6 ist erkennbar, dass das Stromführungselement 30e, bestehend aus seinen beiden Teilen 37 und 38, in dem Verbindungsbereich 39, in dem die beiden Teile 37, 38 miteinander verschweißt sind, jeweils einen rechteckigen (vorzugsweise gleich großen) Querschnitt aufweisen. Ferner erkennt man, dass das Stromführungselement 30e auf der der Leiterplatte 25 zugewandten Seite einen runden Querschnitt aufweist, der zum Verbindungsbereich 39 hin in den rechteckförmigen Querschnitt übergeht.

In der Fig. 7 sind die unterschiedlichen Querschnitte bei den Stromführungselementen 30a bis 30d in deren Kontaktabschnitten 32a bis 32d erkennbar. Insbesondere erkennt man den im Wesentlichen rechteckförmigen Querschnitt im Kontaktabschnitt 32a bis 32d, dessen Querschnittsfläche zumindest im Wesentlichen der Querschnittsfläche eines Zwischenbereichs 43 zwischen den Kontaktabschnitten 31 a bis 31 d und 32a bis 32d entspricht.

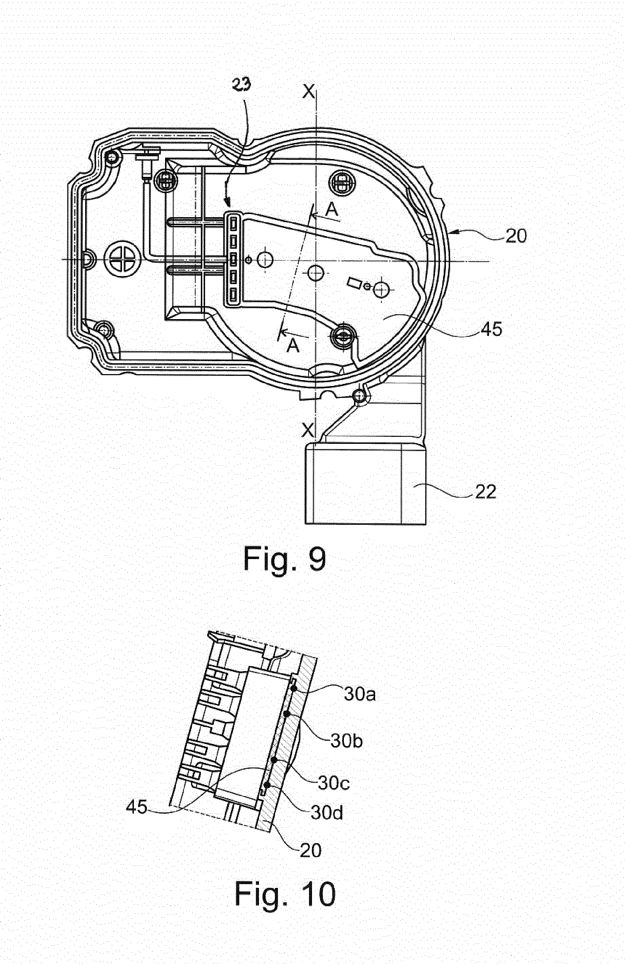

In der Fig. 8 ist insbesondere der reduzierte Querschnitt der Kontaktabschnitte 31a bis 31d im Bereich der Fortsätze 36 erkennbar. Dieser ist dort beispielsweise gabelartig mit zwei Zinken ausgeführt. Auch andere Formen, mit mehreren oder nur einem Zinken, wie in Figur 5 gezeigt, wären jedoch auch denkbar. Insbesondere für den Fall, dass das Material des Gehäusedeckels 20 die Stromführungselemente 30a bis 30e auf der der Innenseite des Gehäusedeckels 20 zugewandten Seite nicht (vollständig) umspritzt, oder dass der Gehäusedeckel 20 nicht aus (nicht elektrisch leitendem) Kunststoff besteht, sondern aus Metall, kann es vorgesehen sein, dass die freiliegenden Abschnitte der Stromführungselemente 30a bis 30e, die im Inneren des Gehäusedeckels 20 angeordnet und insbesondere der Leiterplatte 25 (siehe Fig. 2) zugewandt sind, von einem insbesondere aus Kunststoff bestehenden Schutzelement 45 zumindest bereichsweise überdeckt sind. Eine solche Anordnung ist in den Fig. 9 und 10 dargestellt. Figur 9 zeigt die Innenseite eines erfindungsgemäßen Gehäuseelements, wohingegen Fig. 10 eine teilgeschnittene Ansicht der Figur 9 zeigt. Aus letzterer ist zu entnehmen, dass die Stromführungselemente 30a bis 30d - in diesem Abschnitt von kreisrundem Querschnitt und separat zueinander beabstandet sind. Sie sind zwischen dem Schutzelement 45 und dem Gehäuseelement, vorliegend dem Gehäusedeckel 20, angeordnet. Dabei ist vorliegend das Schutzelement 45 wenigstens teilweise mit dem Gehäuseelement verbunden - z.B. durch Umspritzen, sodass es der Leiterplatte 25 zugewandt ist. Das Schutzelement 45 kann dabei wenigstens abschnittsweise aus einem Material hergestellt sein, dass als elektrischer Isolator dient. Dieses vermeidet Kurzschlüsse an den sonst freiliegenden Bereichen der Stromführungselemente 30a bis 30e. Das Schutzelement 45 kann separat ausgeführt sein und beispielsweise über eine Nietverbindung, eine Schraubverbindung oder Ähnliches mit dem Gehäusedeckel 20 verbunden werden. Es kann aber auch einteilig mit dem Gehäuseelement sein.

Der soweit beschriebene Wischermotor 10 beziehungsweise das als Gehäusedeckel 20 ausgebildete Gehäuseelement können in vielfältiger Art und Weise abgewandelt beziehungsweise modifiziert werden, ohne vom Erfindungsgedanken abzuweichen. Dieser besteht darin, die der elektrischen Kontaktierung dienenden Stromführungselemente 30a bis 30e aus einem insbesondere einen runden Querschnitt aufweisenden biegesteifen Draht als Ausgangsmaterial auszubilden, der im Bereich der Kontaktabschnitte 31 a bis 31 e sowie 32a bis 32e durch einen Prägeschritt eine von dem runden Querschnitt abweichende Form beziehungsweise einen abweichenden Querschnitt aufweisen kann.

### Bezugszeichenliste

- 10: Wischermotor
- 11: Antriebsmotor
- 12: Gehäuse
- 15: Getriebegehäuse
- 16: Antriebswelle
- 17: Verzahnungsbereich
- 18: Getriebegehäusegrundteil
- 20: Gehäusedeckel
- 21: Befestigungsschraube
- 22: äußerer Steckeranschluss
- 23: innerer Steckeranschluss
- 25: Leiterplatte
- 26: Durchgangsöffnung
- 27: Rastdom
- 30: Stromführungselement
- 30a - 30e: Stromführungselement
- 31a - 31e: Kontaktabschnitt
- 32a - 32e: Kontaktabschnitt
- 35: Ende
- 36: Fortsatz
- 37: Teil
- 38: Teil
- 39: Verbindungsbereich
- 40: Trägerelement
- 41: Montageeinheit
- 42: Verbindungsbereich
- 43: Zwischenbereich
- 45: Schutzelement

## Patentansprüche

1. Gehäuseelement (20) für einen Wischermotor (10), wobei das Gehäuseelement (20) mit wenigstens einem Stromführungselement (30; 30a bis 30e) verbunden ist, das an vorzugsweise gegenüberliegenden Endbereichen jeweils einen Kontaktabschnitt (31 a bis 31e, 32a bis 32e) aufweist, wobei das wenigstens eine Stromführungselement (30; 30a bis 30e) aus einem starren, metallischen Element besteht, dessen Querschnitt an den beiden Kontaktabschnitten (31 a bis 31e, 32a bis 32e) einem mit dem jeweiligen Kontaktabschnitt (31a bis 31e, 32a bis 32e) verbindbaren Gegenelement angepasst ist,
**dadurch gekennzeichnet,**
**dass** das Stromführungselement (31 a bis 31 e, 32a bis 32e) aus einem biegesteifen Drahtabschnitt ausgebildet ist.

2. Gehäuseelement nach Anspruch 1,
**dadurch gekennzeichnet,**
**dass** der Drahtabschnitt, zumindest ggf. mit Ausnahme in den Kontaktabschnitten (31 a bis 31 e, 32a bis 32e), einen runden Querschnitt aufweist.

3. Gehäuseelement nach Anspruch 1 oder 2,
**dadurch gekennzeichnet,**
**dass** die Kontaktabschnitte (31 a bis 31 e, 32a bis 32e) einen im Wesentlichen rechteckigen Querschnitt aufweisen, der vorzugsweise durch einen Prägeschritt erzeugt ist, und dass die Querschnittsfläche des Drahts an den Kontaktabschnitten (31 a bis 31e, 32a bis 32e) und in dem Zwischenbereich (43) zwischen den Kontaktabschnitten (31 a bis 31e, 32a bis 32e) zumindest im Wesentlichen gleich groß ist.

4. Gehäuseelement nach einem der Ansprüche 1 bis 3,
**dadurch gekennzeichnet,**
**dass** das Stromführungselement (30; 30a bis 30e) zumindest bereichsweise von Kunststoff umspritzt ist.

5. Gehäuseelement nach Anspruch 4,
**dadurch gekennzeichnet,**
**dass** mehrere Stromführungselemente (30; 30a bis 30d) von dem Kunststoff eines Trägerelements (40) zumindest bereichsweise umspritzt sind.

6. Gehäuseelement nach einem der Ansprüche 1 bis 5,
**dadurch gekennzeichnet,**
**dass** das Trägerelement (40) und/oder Teile der Stromführungselemente (30; 30a bis 30e) von Kunststoff des Gehäuseelements (20) umspritzt sind.

7. Gehäuseelement nach Anspruch 5,
**dadurch gekennzeichnet,**
**dass** das Trägerelement (40) mit dem Gehäuseelement (20) verbunden und bevorzugt einteilig damit ausgebildet ist.

8. Gehäuseelement nach einem der Ansprüche 1 bis 7,
**dadurch gekennzeichnet,**
**dass** das wenigstens eine Stromführungselement (30; 30a bis 30e) von einem separaten Schutzelement (45), das bevorzugt als elektrischer Isolator ausgeführt ist, zumindest bereichsweise überdeckt ist.

9. Gehäuseelement nach einem der Ansprüche 1 bis 8,
**dadurch gekennzeichnet,**
**dass** ein äußerer Steckeranschluss (22) auf der Außenseite des Gehäuseelements angeordnet und bevorzugt einteilig mit diesem ausgeführt ist und das dem äußeren Steckeranschluss (22) zugewandte Ende des Stromführungselements (30; 30a bis 30e) in dem äußeren Steckeranschluss (22) aufgenommen ist, sodass die Kontaktabschnitte (31 a bis 31 e, 32a bis 32e) gleichzeitig die Kontakte des äußeren Steckeranschlusses (22) ausbilden, die mit Kontakten eines als Gegenelement fungierenden äußeren Gegensteckers elektrisch verbindbar sind.

10. Gehäuseelement nach einem der Ansprüche 1 bis 9,
**dadurch gekennzeichnet,**
**dass** ein innerer Steckeranschluss (23) auf der Innenseite des Gehäuseelements angeordnet und bevorzugt einteilig mit diesem ausgeführt ist und das dem inneren Steckeranschluss (23) zugewandte Ende des Stromführungselements (30; 30a bis 30e) in dem inneren Steckeranschluss (23) aufgenommen ist, sodass die Kontaktabschnitte (31a bis 31e, 32a bis 32e) gleichzeitig die Kontakte des inneren Steckeranschlusses (23) ausbilden, die mit Kontakten eines als Gegenelement fungierenden inneren Gegensteckers kontaktierbar sind.

11. Verfahren zum Herstellen eines Gehäuseelements (20) nach einem der Ansprüche 1 bis 8, bei dem wenigstens ein Stromführungselement (30; 30a bis 30e) mit einem Gehäuseelement (20) verbunden wird, **gekennzeichnet durch** folgende Herstellungsschritte:
- Ablängen wenigstens eines Drahtabschnitts von einem einen konstanten, insbesondere runden Querschnitt aufweisenden, endlosen biegesteifen Draht
- Ggf. Biegen des Drahtabschnitts
- Ändern des Querschnitts des Drahts an wenigstens einem Kontaktabschnitt (31 a bis 31e, 32a bis 32e)
- Zumindest mittelbares Befestigen des Drahtabschnitts an dem Gehäuseelement (20).

12. Verfahren nach Anspruch 11,
**dadurch gekennzeichnet,**
**dass** mehrere Stromführungselemente (30; 30a bis 30e) von dem Kunststoff eines Trägerelements (40) zumindest bereichsweise umspritzt werden, und dass der Verbund aus den mehreren Stromführungselementen (30; 30a bis 30e) und dem Trägerelement (40) anschließend von dem Kunststoff des Gehäuseelements (20) zumindest bereichsweise umspritzt wird,
oder dass der Verbund aus den mehreren Stromführungselementen (30; 30a bis 30e) und dem Trägerelement (40) anschließend mit dem aus Metall bestehenden Gehäuseelement (20) verbunden wird.

13. Wischermotor (10), umfassend einen Antriebsmotor (11), ein mit dem Antriebsmotor (11) zur Drehzahl-/Drehmomentwandlung gekoppeltes oder koppelbares Getriebe, eine Leiterplatte (25) zur Ansteuerung des Antriebsmotors (11) und ein den Antriebsmotor (11), das Getriebe und/oder die Leiterplatte (25) umgebendes Gehäuse, wobei das Gehäuse wenigstens teilweise von dem Gehäuseelement (20) nach einem der Ansprüche 1 bis 10 gebildet wird.

14. Wischermotor (10) nach Anspruch 13,
**dadurch gekennzeichnet,**
**dass** das Gehäuseelement (20) ein Getriebedeckel eines Getriebegehäuses (15) ist.
